# FASCICULE DE BREVET EUROPEEN

(11) **EP 0 351 275 B1**
(45) Date de publication et mention de la délivrance du brevet: **28.07.1993**
(21) Numéro de dépôt: 89401831.6
(22) Date de dépôt: 27.06.1989
(51) Int. Cl.: A47C 7/74, B60N 2/00

(54) **Dispositif chauffant pour siège, notamment de véhicule automobile**
Heizungsvorrichtung für einen Sitz, insbesondere für einen Kraftwagensitz
Heating-device for a seat, particularly for a motor vehicle seat

(30) Priorité: 01.07.1988 FR 8808952
(43) Date de publication de la demande: 17.01.1990
(73) Titulaire: AUTOMOBILES PEUGEOT, 75116 Paris (FR); AUTOMOBILES CITROEN, 92200 Neuilly-sur-Seine (FR)
(72) Inventeur: Huguet, Pascal, F-70400 Héricourt (FR)
(74) Mandataire: Berger, Helmut

(56) Documents cités:
- EP-A- 0 226 692
- DE-U- 7 905 101
- DE-U- 8 137 914
- US-A- 3 017 493
- US-A- 4 590 359

## Description

La présente invention concerne un dispositif chauffant pour siège, notamment de véhicule automobile, du type décrit dans le préambule de la revendication principale.

Un tel dispositif est connu par EP-A-226692. Comme le prouve le document, il est de plus en plus fréquent d'intégrer le chauffage notamment des assises à la coiffe d'habillage du siège lui-même. En particulier dans le cas de sièges qui présentent des surfaces esthétiques galbées et comportent à cette fin des rappels transversaux, la configuration du réseau électrique à l'intérieur de la nappe ne permet pas la couture de la nappe sous la coiffe sans risque de coupure du réseau électrique.

L'invention a pour but de proposer un dispositif chauffant qui ne présente plus l'inconvénient qui vient d'être énoncé.

Pour atteindre ce but, le dispositif selon l'invention comporte les caractéristiques énoncées dans la partie caractérisante de la revendication principale.

Selon une caractéristique avantageuse de l'invention, deux pavés sont reliés par une boucle bifilaire.

Selon une autre caractéristique avantageuse de l'invention, la boucle est susceptible d'être repliée sous la nappe, de façon que celle-ci puisse être cousue sous la coiffe d'habillage le long de ses bords longitudinaux.

Selon encore une autre caractéristique avantageuse de l'invention, pour un siège comportant des surfaces galbées dont l'intersection présente un angle saillant rentrant, et où la coiffe d'habillage est retenue dans la zone de l'intersection à l'aide de tresses de rappel fixées à des tringles de maintien disposées à l'intérieur du corps de garnissage du siège, les boucles de liaisons de pavés chauffants adjacents présentent une hauteur suffisante pour que ses fils conducteurs puissent passer en dessous des tringles.

D'autres modes de réalisation selon l'invention sont indiqués dans les revendications 5 à 7

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :
La figure 1 est une vue schématique en perspective d'un fauteuil pourvu d'un dispositif chauffant selon l'invention ;
La figure 2 est une vue schématique d'un dispositif chauffant où la nappe présente une couture transversale ;
La figure 3 est une vue schématique d'un dispositif chauffant selon l'invention, où la nappe présente une couture longitudinale ; et
La figure 4 est une vue en coupe longitudinale, avec arrachement, le long de la ligne IV-IV de la figure 1, d'un siège à assise galbée auquel est intégré un dispositif chauffant selon l'invention.

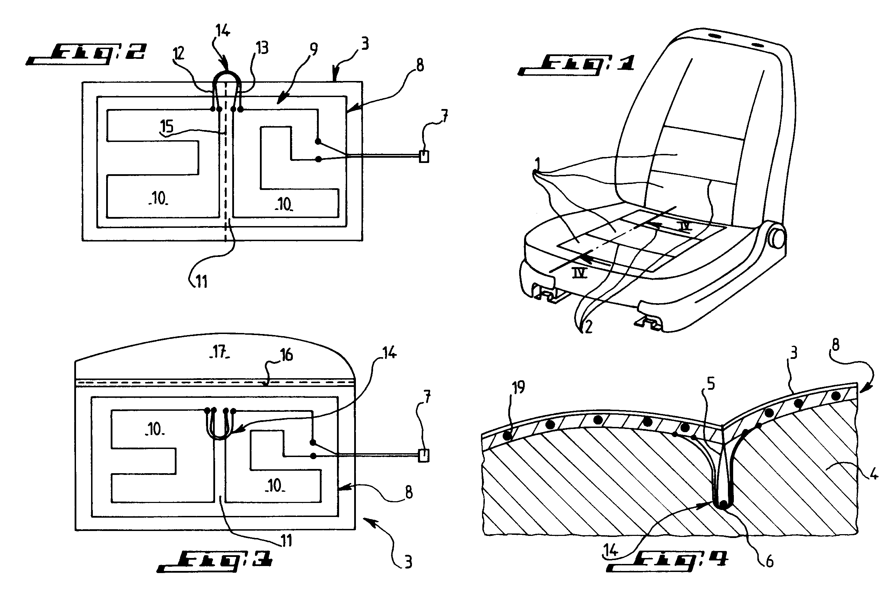

L'invention sera expliquée dans son application à un siège de véhicule tel qu'il est représenté à la figure 1, qui comporte des surfaces esthétiques galbées 1 dont les zones d'intersection 2 présentent un angle saillant rentrant.

En se référant à la figure 4, on constate que la coiffe d'habillage 3 du siège, pour pouvoir épouser parfaitement les galbes et notamment les angles rentrants de la matelassure 4, est appliquée contre celle-ci au moyen de tresses de rappel 5 solidaires de la coiffe 3 et de tringles de maintien en tension 6 qui sont incorporées à la matelassure 4, de manière connue en soi.

Le dispositif chauffant selon l'invention comprend une nappe 8 à laquelle est intégré un réseau 9 de fils électriquement conducteurs qui produit de la chaleur lorsqu'il est parcouru par un courant électrique. En 7 on a représenté schématiquement les moyens connecteurs du réseau électrique 9 permettant de le brancher sur une source d'énergie électrique appropriée. Comme cela ressort des figures 2 et 3, le réseau 9 de fils conducteurs est divisé en pavés chauffants 10 juxtaposés dans la direction longitudinale de la nappe 8, en laissant subsister entre deux pavés adjacents 10 une zone 11 qui s'étend sur toute la largeur de la nappe et est dépourvue de fils conducteurs. Les deux pavés 10 ainsi séparés par la zone 11 sont reliés électriquement par deux fils 12, 13 qui sortent de la nappe et forment une boucle bifilaire 14, à l'extérieur de la nappe.

Comme le montre la figure 2, la hauteur de la boucle 14 est telle que sa base s'étend latéralement au-delà des bords longitudinaux de la nappe lorsqu'elle est déployée dans le plan de la nappe, sensiblement symétriquement par rapport à la zone intermédiaire 11. On a ainsi créer des conditions qui permettent de coudre la nappe 8 sous la coiffe d'habillage 3 par une ligne de couture transversale continue 15 s'étendant à l'intérieur de la zone intermédiaire 11, sans aucun risque d'une coupure du réseau électrique 9.

Comme l'illustre la figure 3, en repliant la boucle 14 sous la nappe, en direction de sa partie centrale, on peut coudre la nappe le long de ses bords longitudinaux par des coutures 16 à des parties latérales 17 de la coiffe d'habillage 3, sans qu'il y ait le moindre risque d'une coupure du réseau électrique 9.

Comme cela est montré à la figure 4, la nappe chauffante, avec ses pavés chauffants 10 pourvus de fils électriquement conducteurs intégrés 19 et séparés par la zone intermédiaire 11, est cousue sous la coiffe d'habillage 3 tout en reposant sur la matelassure 4 du siège. Les tresses de rappel 5 de la coiffe 3, qui sont retenues par les tringles 6 se trouvent au niveau de la zone intermédiaire 11 avec sa ligne de couture 15. Pour être compatible avec ce mode de retenue de la nappe d'habillage 3 sur la matelassure 4, les boucles 14 des fils électriquement conducteurs doivent présenter une hauteur qui permet de contourner les tresses 5 et les tringles 6 correspondantes.

Une boucle bifilaire 14 selon l'invention peut être réalisée de différentes manières, par exemple par des conducteurs isolés soudés sur les pavés chauffants, par des conducteurs isolés pourvus de connecteurs électriques ou par des fils du réseau chauffant isolés et enroulés en spirale à la manière d'un fil de téléphone.

## Revendications

1. Dispositif chauffant pour siège, notamment de véhicule automobile du type comprenant une nappe (P) contenant un réseau (q) de fils conducteurs d'un courant électrique formant éléments de chauffage, qui est reliée à la coiffe d'habillage recouvrant ledit siège, le réseau électrique (9) de la nappe (8) étant divisé en pavés chauffants (10) en laissant subsister entre deux pavés adjacents une zone intermédiaire (11) s'étendant sur toute la largeur de la nappe et deux pavés adjacents étant reliés électriquement par des fils (12, 13), caractérisé en ce que la zone intermédiaire (11) est dépourvue de fils conducteurs et que les fils (12, 13) qui relient électriquement deux pavés adjacents sortent de la nappe (8) et forment des boucles (14) séparées, la nappe (8) étant susceptible d'être cousue à la coiffe d'habillage (3) le long d'une couture (15) à l'intérieur de ladite zone intermédiaire (11) et lesdites boucles présentant une hauteur suffisante pour se trouver à l'extérieur de la zone de couture lorsqu'elles sont déployées dans le plan de la nappe.

2. Dispositif chauffant selon la revendication 1, caractérisé en ce que deux pavés chauffants (10) sont reliés par une boucle (14) bifilaire.

3. Dispositif selon l'une des revendications 1 ou 2, caractérisé en ce que les boucles (14) sont susceptibles d'être repliées vers le centre de la nappe (8), de façon que celle-ci puisse être cousue à la coiffe d'habillage (3) le long de ses bords longitudinaux.

4. Dispositif chauffant selon l'une des revendications précédentes pour un siège comportant des surfaces galbées dont l'intersection présente un angle saillant rentrant, et où la coiffe d'habillage est retenue dans la zone de l'intersection à l'aide de tresses de rappel fixées à des tringles de maintien disposées à l'intérieur du corps de garnissage du siège, caractérisé en ce que les boucles (14) de liaison de pavés chauffants (10) adjacents présentent une hauteur suffisante pour que ses fils conducteurs puissent passer en dessous des tringles de maintien (6).

5. Dispositif chauffant selon l'une des revendications précédentes, caractérisé en ce qu'une boucle (14) est formée par des fils conducteurs isolés soudés sur le réseau chauffant (9).

6. Dispositif chauffant selon l'une des revendications 1 à 4, caractérisé en ce qu'une boucle (14) est formée par des conducteurs isolés pourvus de connexions électriques.

7. Dispositif chauffant selon l'une des revendications 1 à 4, caractérisé en ce qu'une boucle (14) est formée par des fils du réseau chauffant (9), qui sont isolés et enroulés en spirale à spires axialement juxtaposées.

## Claims

1. Heating device for a seat in particular of an automotive vehicle, of the type comprising a sheet (P) containing a network (q) of wires conducting an electric current, forming heating elements, which is connected to the lining cap covering the said seat, the electric network (9) of the sheet (8) being divided into heating blocks (10) while leaving between two adjacent blocks an intermediate zone (11) extending over the whole width of the sheet and two adjacent blocks being electrically connected by wires (12, 13), characterized in that the intermediate zone (11) is devoid of conducting wires and that the wires (12, 13) which electrically connect two adjacent blocks are extending out of the sheet (8) and form separate loops (14), the sheet (8) being adapted to be sewn to the lining cap (3) along a seam (15) inside of the said intermediate zone (11) and the said loops exhibiting a sufficient height for being located outside of the seam zone when they are unfolded in the plane of the sheet.

2. Heating device according to claim 1, characterized in that two heating blocks (10) are connected by a two-wire loop (14).

3. Device according to one of claims 1 or 2, characterized in that the loops (14) are adapted to be folded back towards the center of the sheet (8), so that the latter might be sewn to the lining cap (3) along its longitudinal edges.

4. Heating device according to one of the foregoing claims for a seat comprising curved surfaces the intersection of which exhibits a projecting re-entrant angle and wherein the lining cap is retained in the zone of the intersection with the assistance of drawback braids fastened to holding rods disposed inside of the fitting body of the seat, characterized in that the loops (14) for the connection of adjacent heating blocks (10) exhibit a sufficient height in order that its conducting wires may pass below the holding rods (6).

5. Heating device according to one of the foregoing claims, characterized in that a loop (14) is formed of insulated conducting wires welded to the heating network (9).

6. Heating device according to one of claims 1 to 4, characterized in that a loop (14) is formed of insulated conductors provided with electrical connections.

7. Heating device according to one of claims 1 to 4, characterized in that a loop (14) is formed of wires of the heating network (9), which are insulated and wound into a spiral with axially juxtaposed currents.

## Patentansprüche

1. Heizvorrichtung für einen Sitz insbesondere für ein Kraftfahrzeug, der eine ein Netzwerk (q) von einen elektrischen Strom leitenden, Heizelemente bildenden Drähten enthaltende Einlage (P) aufweisenden Gattung, die mit der den besagten Sitz bedeckenden Verkleidungskappe verbunden ist, wobei das elektrische Netz (9) der Einlage (8) in Heizblöcken (10) unterteilt ist, indem es zwischen zwei angrenzenden Blöcken einen sich über die ganze Breite der Einlage erstreckenden Zwischenbereich (11) bestehen lässt und wobei zwei angrenzende Blöcke durch Drähte (12, 13) elektrisch verbunden sind, dadurch gekennzeichnet, dass der Zwischenbereich (11) ohne leitungsfähige Drähte ist und dass die Drähte (12, 13), die zwei angrenzende Blöcke elektrisch verbinden, aus der Einlage (8) austreten und getrennte Schleifen (14) bilden, wobei die Einlage (8) geeignet ist, an die Verkleidungskappe (3) entlang einer Naht (15) innnerhalb des besagten Zwischenbereichs (11) angenäht zu werden und die besagten Schleifen eine ausreichende Höhe aufweisen, um sich ausserhalb des Nahtbereichs zu befinden, wenn sie in der Ebene der Einlage entfaltet sind.

2. Heizvorrichtung nach Anspruch 1, dadurch gekennzeichnet, dass zwei Heizblöcke (10) durch eine zweidrähtige Schleife (14) verbunden sind.

3. Vorrichtung nach einem der Ansprüche 1 oder 2, dadurch gekennzeichnet, dass die Schleifen (14) geeignet sind, zum Mittelpunkt der Einlage (8) hin zurückgefaltet zu werden, so dass die letztere an die Verkleidungskappe (3) entlang ihrer Längsränder angenäht werden kann.

4. Heizvorrichtung nach einem der vorangehenden Ansprüche für einen ausgebauchte Flächen aufweisenden Sitz, deren Schnittstellen einen vorragenden einspringenden Winkel aufweisen und bei welchem die Verkleidungskappe in dem Bereich der Schnittstelle mit Hilfe von innerhalb des Ausfütterungskörpers des Sitzes angeordneten Halterungsstäben befestigten Rückstellgeflechten zurückgehalten wird, dadurch gekennzeichnet, dass die Schleifen (14) zur Verbindung von angrenzenden Heizblöcken (10) eine genügende Höhe aufweisen, damit ihre leitenden Drähte unterhalb der Halterungsstäben (6) verlaufen können.

5. Heizvorrichtung nach einem der vorangehenden Ansprüche, dadurch gekennzeichnet, dass eine Schleife (14) durch an das Heiznetz (9) angeschweisste isolierte Leitungsdrähte gebildet wird.

6. Heizvorrichtung nach einem der Ansprüche 1 bis 4, dadurch gekennzeichnet, dass eine Schleife (14) durch mit elektrischen Anschlüssen versehene isolierte Leiter gebildet wird.

7. Heizvorrichtung nach einem der Ansprüche 1 bis 4, dadurch gekennzeichnet, dass eine Schleife (14) durch Drähte des Heiznetzes (9), die isoliert und spiralförmig mit axial nebeneinander liegenden Windungen gewickelt sind, gebildet wird.
